# EUROPEAN PATENT APPLICATION

(11) **EP 2 610 101 A1**
(43) Date of publication of application: **03.07.2013**
(21) Application number: 12008662.4
(22) Date of filing: 28.12.2012
(51) Int. Cl.: B60L 8/00, H02K 7/18

(54) **System for generating electrical energy using renewable sources for land or water-borne vehicles**

(30) Priority: 30.12.2011 IT PS20110015
(71) Applicant: Ponselè, Michele, 61122 Pesaro PU (IT); Ballanti, Massimo, 48121 Ravenna (RA) (IT); Montanaro, Ivan, 47032 Bertinoro (FC) (IT); Vestrucci, Claudio, 47014 Meldola (FC) (IT)
(72) Inventor: Ponselè, Michele, I - 61122 Pesaro PU (IT)
(74) Representative: Natali, Dario

(57) **Abstract**

Electric power production device adapted for making use of unexploited alternative energies from any mobile vehicle, whether it is a tire vehicle or a water-borne vehicle, said device comprising photovoltaic panels, conduits, rotary generators and induction generators, and at least one control circuit with a respective uninterruptible power supply assembly;
the air flow from the vehicle while in motion is routed into a conduit (2) having arranged therein blades (3) to drive a rotary electric power generator (4) which provides power to the control assembly (12).

## Description

The technology currently used for the production of electric power to be supplied to refrigeration assemblies on mobile vehicles, ancillary systems or any other equipment to be powered is implemented by means of generator sets or generators which are coupled to the main motor of the vehicle. This results in a considerably increased consumption of the vehicle itself as well as a significantly reduced drive power. Furthermore, the increased consumption leads to an increased emission of CO2 and particulate matter into the atmosphere, thereby exacerbating the environmental pollution.

The device of the invention aims to overcome this problem in a simple and intelligent way, i.e. by exploiting the energies existing in the vehicle which are unused and ignored, and therefore lost.

The energies that we are going to exploit are derived from the sun, the motion, and the air flow which is displaced by the mobile vehicle while in motion.

Therefore, the present system will employ photovoltaic panels arranged on the surface of the vehicle which is exposed to the sun, suitably shaped blades arranged within special tunnels into which part of the air mass displaced at every time by the mobile vehicle while in motion is routed, such blades being connected to particular electric power generators having a very high efficiency and a minimal mechanical resistance, as well as kinematic generators to exploit the kinetic energy from accelerations, decelerations and continuous vibrations always existing on any mobile vehicle. The sheets and drawings hereinbelow show an example of how these solutions can be used with a mobile vehicle. Figure N 1 shows a section of the device, Figure N 2 shows a possible installation on a mobile vehicle, Figure N 3 shows the structure of the vibration-based generator.

As shown in Sheets 1 and 2, the device comprises a set of photovoltaic panels 1 forming a roofing for the van-vehicle, and a conduit 2 having arranged therein blade assemblies 3 which are mechanically connected to the power generation system 4.

A channel 5 has arranged therein vibration-based generators 6 to simultaneously exploit the flow-out energy from air flowing into the conduit 2 to move the blades 3 and then out of the channel 5.

These generators are driven not only by such an energy, but also by the vibrations of the vehicle as well as by the accelerating and decelerating movements thereof.

Now, let us analyse the structure of the dynamic vibration-based generator which is shown in Sheet 3.

Numeral 7 is used to denote springs adapted for tensioning a wire 8 having arranged thereon suitably finned inertial masses 9, a set of suitably oriented magnets 10, and a set of suitably shaped coils 11.

The operation of the system illustrated herein is the following: the wire 8 tensioned by the springs 7 can freely swing in both the transverse plane and the longitudinal plane: these swinging movements are determined by the finned inertial masses 9 and the mass and weight of the magnets 10.

The swinging movements of the magnets 10 occurring within the coils 11 induce an electric field which will produce a potential difference thereacross: the power thus produced will be supplied to the control unit 12 having connected thereto the outputs from the photovoltaic panels 1 at 13, and the outputs from the generators 4 at 14, Sheet 1.

This unit will monitor and appropriately manage the individual power production sources in such a way that an uninterruptible power supply assembly can be constantly kept activated to power the refrigeration assemblies or ancillary units.

The voltage generated may be either low or high and either continuous or alternating, and if alternating, it may be either single-phase or three-phase depending on the applications or requirements of the user.

Alternatively or in addition to the roof-mounted channel assembly 3, 5, a similar device can be installed to the floor or sides of the vehicle.

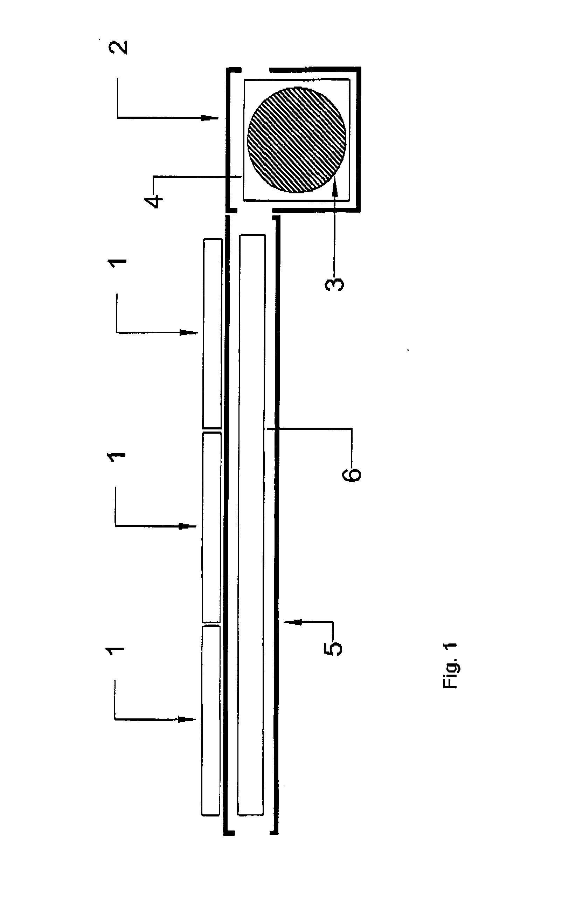

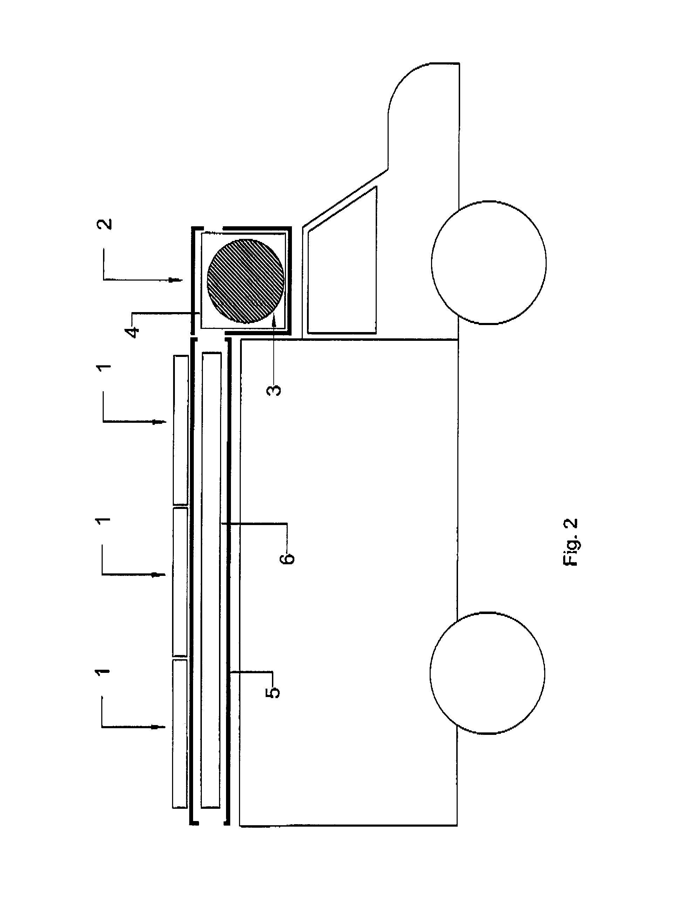

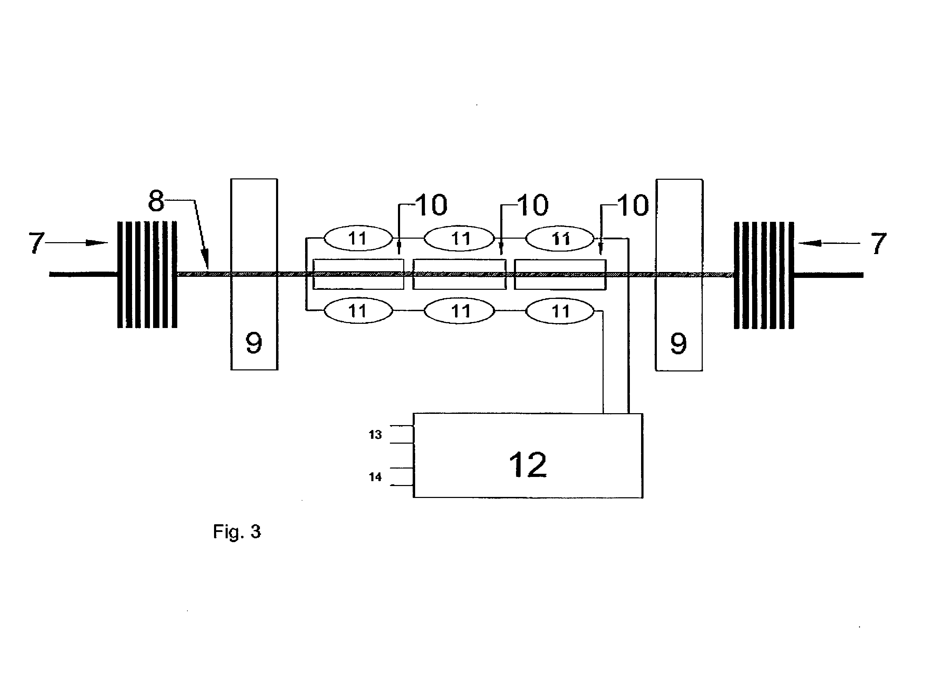

## Claims

1. Electric power production device adapted for making use of unexploited alternative energies from any mobile vehicle, whether it is a tire vehicle or a water-borne vehicle, said device comprising photovoltaic panels, conduits, rotary generators and induction generators, and at least one control circuit with a respective uninterruptible power supply assembly, **characterized in that** the air flow from the vehicle while in motion is routed into a conduit (2) having arranged therein blades (3) to drive a rotary electric power generator (4) which provides power to the control assembly (12).

2. Device according to claim 1, **characterized in that** there is provided an induction generator comprising magnets (10) hanging from a wire (8) which is tensioned by springs (7), which magnets are positioned opposite to coils (11) at whose ends potential differences are generated due to the continuous movement of the magnets resulting from the vibration and movement of the vehicle.

3. Device according to the preceding claims, **characterized in that** the wire (8) has keyed thereto inertial masses (9) which are preferably finned to exploit the air flow as well as the movement of the vehicle.

4. Device according to the preceding claims, **characterized in that** the device can be installed to the roof, floor or sides of the mobile vehicle.

5. Device according to the preceding claims, **characterized in that**, in addition to the rotary generator and the vibration-based generator, there are provided photovoltaic panels.
